# EUROPÄISCHE PATENTSCHRIFT

(11) **EP 0 353 418 B1**
(45) Veröffentlichungstag und Bekanntmachung des Hinweises auf die Patenterteilung: **15.09.1993**
(21) Anmeldenummer: 89110077.8
(22) Anmeldetag: 03.06.1989
(51) Int. Cl.: G10K 11/26

(54) **Verfahren und Schaumstoff-Körper zur Abschottung von Hohlkörpern**
Method and foam body for closing hollow bodies
Procédé et corps en mousse pour l'obturation des corps creux

(30) Priorität: 30.07.1988 DE 3826012
(43) Veröffentlichungstag der Anmeldung: 07.02.1990
(73) Patentinhaber: Bayerische Motoren Werke Aktiengesellschaft, 80788 München (DE)
(72) Erfinder: Stöckl, Siegfried, D-8308 Pfeffenhausen (DE); Karg, Dieter, D-8061 Niederroth (DE)

(56) Entgegenhaltungen:
- AU-D- 6 400 565
- DE-A- 2 309 564

## Beschreibung

Die Erfindung bezieht sich auf ein Verfahren zur Abschottung von Hohlkörpern mit einem Schaumstoffkörper. Sie hat auch einen Schaumstoffkörper zur Durchführung des Verfahrens zum Gegenstand.

Solche Schaumstoffkörper werden als Abschottung in zum Teil schwer zugänglichen Hohlkörpern eingesetzt. So ist es insbesondere bei Fahrzeugen aus akustischen Gründen notwendig, bestimmte Hohlkörperstrukturen der Karosserie, wie die A-, B- und C-Säule eines PKW, abzuschotten.

Zur Abschottung dieser Säulen und anderer schwer zugänglicher Hohlräume von Kraftfahrzeugen werden verschiedene Methoden angewandt.

So ist ein Polyurethan-Schaumstoff im Handel, der mit einer klebrigen Kautschukmasse getränkt ist, so daß er nach dem Zusammendrücken kurzzeitig zusammenklebt, bevor er sich wieder ausweitet. Im zusammengedrückten, zusammengeklebten Zustand wird der Schaumstoffkörper dann von Hand in die Säule des PKW geschoben. Da die Expansion des zusammengeklebten Schaumstoffs während des Einschiebens bereits einsetzt, kann es vorkommen, daß der Schaumstoffkörper in der Säule nicht richtig angeordnet ist. Auch sind nur Hohlräume mit relativ einfachen Querschnitten, wie zylindrische Hohlräume nach dieser Methode abschottbar, da sich der Schaumstoffkörper beim Einführen leicht verdreht.

Nach einer weiteren bekannten Methode wird eine schäumbare Masse in die Säule gegeben, d. h. die Säule wird ausgeschäumt. Dabei muß die Säule vorher an ihrer Unterseite verschlossen werden, damit der Schaum nicht abfließen kann. Auch muß für die Schaumreaktion sehr sorgfältig und sauber gearbeitet werden. Diese Methode ist deshalb mit einem hohen apparativen Aufwand und einer schwierigen Verarbeitung verbunden. Die Komponenten der schäumbaren Masse sind darüber hinaus gesundheitsschädlich.

Aufgabe der Erfindung ist es daher, auch schwer zugängliche Hohlräume mit gegebenenfalls komplizierter Geometrie insbesondere bei Kraftfahrzeugen mit geringem Aufwand sicher abzuschotten.

Dies wird erfindungsgemäß durch das im Anspruch 1 gekennzeichnete Verfahren sowie den im Anspruch 3 gekennzeichneten Schaumstoffkörper erreicht. In den Unteransprüchen sind vorteilhafte Ausgestaltungen der Erfindung angegeben.

Erfindungsgemäß erfolgt die Abschottung von Hohlräumen also durch Einbringung eines Schaumstoffkörpers, der in einem Kunststoffbeutel verpackt, d. h. mit einer Kunststoffhaut überzogen ist. Der Kunststoffbeutel mit dem Schaumstoffkörper, der ihn voll ausfüllt, wird dabei evakuiert, wodurch er sich zusammenzieht. Damit dieses Zusammenziehen erfolgen kann, muß der Schaumstoffkörper aus einem offenzelligen Schaumstoff bestehen. In der Regel handelt es sich dabei um PUR-Schaumstoffe, jedoch sind auch andere offenzellige Schaumstoffe denkbar, z. B. ein Melamin-Schaum.

Das Zusammenziehen beim Evakuieren erfolgt dabei in erster Linie in radialer Richtung des Schaumstoffkörpers, d. h. er verkleinert seinen Durchmesser, während seine Länge im wesentlichen gleich bleibt, d. h. der erfindungsgemäße Schaumstoffkörper weist im allgemeinen eine der abzuschottenenden Länge des Hohlkörpers entsprechende Länge auf.

Damit der erfindungsgemäße Schaumstoffkörper den Hohlraum vollständig ausfüllt, also satt an der gesamten Hohlraum-Innenwand anliegt, kann er nach dem Einführen in den Hohlraum noch zusätzlich aufgeblasen werden. Auch ist es vorteilhaft, die Außenkontur des erfindungsgemäßen Schaumstoffkörpers der Innenkontur des betreffenden Hohlraums anzupassen. Im zusammengezogenen Zustand kann der erfindungsgemäße Schaumstoffkörper also problemlos in gerader Richtung, also ohne verdreht werden zu müssen, eingeführt werden. Mit den geschilderten Maßnahmen, also Aufblasen, entsprechender Außenkontur und gerades Einführen kann er dabei auch Hohlräume mit einer relativ komplizierten Geometrie, z. B. spitzwinklige oder sternförmige Hohlräume sicher vollständig ausfüllen.

Zum Anlegen des Vakuums weist die Haut, mit der der erfindungsgemäße Schaumstoffkörper überzogen ist, wenigstens eine Öffnung auf.

In dem Fall, in dem der erfindungsgemäße Schaumstoffkörper zur Abschottung der Säule eines PKW verwendet wird, durch die sich der Wasserablaufschlauch von der Rinne um die Schiebedach-Öffnung erstreckt, ist es vorteilhaft, den erfindungsgemäßen Schaumstoffkörper mit einer Längsbohrung zu versehen, in die der Wasserablaufschlauch geschoben wird. Der Wasserablaufschlauch kann dazu mit einigen kleinen Löchern versehen werden, welche in den Schaumstoffkörper angeordnet werden, so daß sich der Schaumstoffkörper bei Anlegen des Vakuums an den Wasserablaufschlauch zusammenzieht. In diesem Zustand kann der Wasserablaufschlauch dann als Einführhilfe beim Einführen in die Säule verwendet werden. Das mit den Löchern versehene Schlauchstück kann dann aus dem Schaumstoffkörper geschoben und gegebenenfalls abgeschnitten werden.

Die Haut des erfindungsgemäßen Schaumstoffkörpers dient also in erster Linie dazu, ein Vakuum an den Schaumstoffkörper anlegen zu können, um dessen Volumen erheblich zu verringern, so daß er leichter in den Hohlraum eingeführt werden kann, wobei nach Abstellen des Vakuums der Schaumstoffkörper die Trägerstruktur ausfüllt, also abschottet.

Daneben verhindert die Haut aber auch die Wasseraufnahme, die gerade bei einem offenzelligen Schaumstoff zu Korrosionsproblemen führen kann.

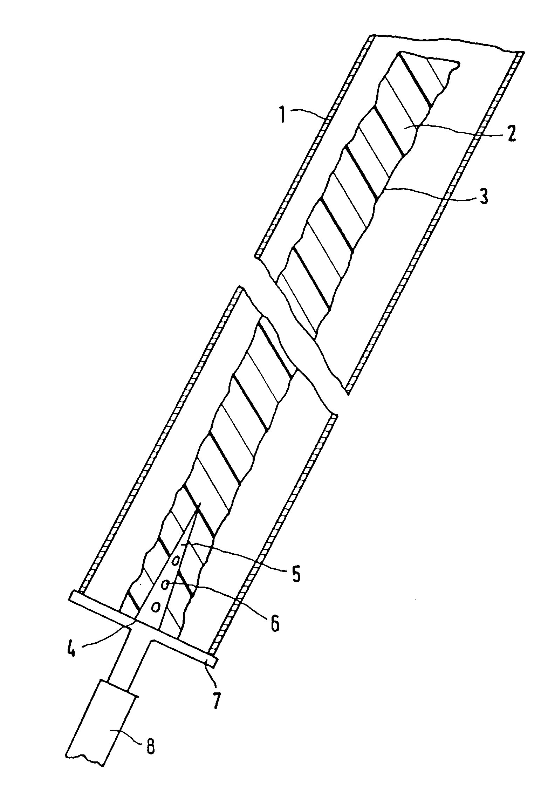

Nachstehend ist die Erfindung anhand der beigefügten Zeichnung näher erläutert, deren einzige Figur schematisch einen Schnitt durch die A-Säule eines PKW zeigt, die mit einem erfindungsgemäßen Schaumstoffkörper abgeschottet werden soll.

Danach ist in die A-Säule 1 ein zusammengezogener Schaumstoffkörper 2 eingeführt, der aus einem offenzelligen Schaumstoff besteht und mit einer Haut 3 überzogen ist.

Zum Zusammenziehen des Schaumkörpers 2 weist die Haut 3 an ihrer in Einführrichtung hinteren Stirnseite eine Öffnung 4 auf, durch die ein Dorn 5 ragt, der mit Löchern 6 versehen auf einem Teller 7 angeordnet ist, der eine Anlagefläche für die hintere Stirnseite des Schaumstoffkörpers 2 bildet. Die Löcher 6 im Dorn 5 sind an einem Vakuumschlauch 8 angeschlossen.

Bei der in der Zeichnung dargestellten Stellung ist der Schaumstoffkörper 2 also über die Löcher 6 evakuiert, d. h. auf einen relativ geringen Durchmesser zusammengezogen, so daß er problemlos in die Säule 1 geschoben werden kann. Wenn in dieser Stellung das Vakuum beseitigt wird und damit Luft in den Kunststoffkörper 2 strömt, dehnt er sich aus und füllt die Säule 1 vollständig aus.

## Patentansprüche

1. Verfahren zur Abschottung von Hohlkörpern (1) mit einem Schaumstoff-Körper (2), dadurch gekennzeichnet, daß man in den Hohlraum des Hohlkörpers (1) einen aus offenzelligem Schaumstoff bestehenden Körper (2) einführt, der mit einer gasundurchlössigen Haut (3) überzogen ist, welche wenigstens eine Öffnung (4) aufweist, an die beim Einführen des Schaumstoffkörpers (2) ein Vakuum zur Kontraktion des Schaumkörpers (2) angelegt wird, und man den kontraktierten Schaumstoffkörper (2) nach dem Einführen in den Hohlraum durch Beseitigung des Vakuums expandieren läßt.

2. Verfahren nach Anspruch 1, dadurch gekennzeichnet, daß der kontraktierte Schaumstoffkörper (2) nach dem Einführen in den Hohlraum durch Überdruck expandiert wird.

3. Schaumstoff-Körper (2) zur Durchführung des Verfahrens nach Anspruch 1 oder 2, dadurch gekennzeichnet, daß er mit einer gasundurchlässigen Haut (3) überzogen ist, welche wenigstens eine Öffnung (4) zum Anlegen eines Vakuums aufweist und aus einem offenzelligen Schaumstoff (2) besteht.

4. Schaumstoffkörper nach Anspruch 3, dadurch gekennzeichnet, daß der offenzellige Schaumstoff (2) ein Polyurethanschaumstoff ist.

5. Schaumstoffkörper nach Anspruch 3 oder 4, dadurch gekennzeichnet, daß seine Außenkontur der Innenkontur des Hohlkörpers (1) angepaßt ist.

6. Schaumstoffkörper nach einem der Ansprüche 3 bis 5, wobei der Hohlkörper die Säule eines PKW ist, durch die der Wasserablaufschlauch vom Schiebedach verläuft, dadurch gekennzeichnet, daß der Wasserablaufschlauch sich durch den Schaumstoffkörper (2) erstreckt und mit wenigstens einem Loch zum Evakuieren des Schaumstoffkörpers (2) bei an dem Wasserablaufschlauch angelegten Vakuum versehen ist.

## Claims

1. A method of filling hollow members (1) with a foam member (2), characterised in that a member (2) made of open-cell foam is inserted into the cavity in the hollow member (1), the foam member being covered with a gas-tight skin (3) having at least one opening (4) to which a negative pressure can be applied so as to contract the foam member (2) when inserted, and,after the contracted foam member (2) has been inserted into the cavity, it is expanded by removing the negative pressure.

2. A method according to claim 1, characterised in that,after being inserted into the cavity, the contracted foam member (2) is expanded by excess pressure.

3. A foam member (2) for working the method according to claim 1 or 2, characterised in that it is covered by a gas-tight skin (3) having at least one opening (4) for applying a negative pressure and is made of an open-cell foam (2).

4. A foam member according to claim 3, characterised in that the open-cell foam (2) is a polyurethane foam.

5. A foam member according to claim 3 or 4, characterised in that its outer contour is adapted to the inner contour of the hollow member (1).

6. A foam member according to any of claims 3 to 5, the hollow member being the column of a passenger car, the water drip tube extending through the column from the sliding roof, characterised in that the water drip tube extends through the foam member (2) and is formed with at least one hole for evacuating the foam member (2) when a negative pressure is applied to the water drip tube.

## Revendications

1. Procédé d'obturation de corps creux (1) au moyen de garniture en mousse (2), caractérisé en ce qu'on introduit à l'intérieur du corps creux (1) une garniture (2) faite d'une mousse à cellules ouvertes recouverte d'une peau (3) imperméable aux gaz et présentant au moins une ouverture (4) par laquelle, au moment de l'introduction de la garniture (2) on produit le vide à l'intérieur de celle ci de manière à la contracter, le retour à son volume normal s'effectuant après introduction dans le corps creux, en faisant cesser le vide.

2. Procédé selon la revendication 1, caractérisé en ce que la garniture (2) après son introduction dans le corps creux est expansée à l'intérieur de celui ci par l'effet d'une surpression.

3. Garniture de mousse (2) pour la mise en oeuvre du procédé selon la revendication 1 ou 2, caractérisée en ce qu'elle est recouverte d'une peau (3) imperméable aux gaz et présente au moins une ouverture (4) de mise au vide, la mousse constitutive (2) étant du type à cellules ouvertes.

4. Garniture de mousse selon la revendication 3, caractérisée en ce que la mousse à cellules ouvertes (2) est une mousse de polyuréthane.

5. Garniture de mousse selon la revendication 3 ou 4, caractérisée en ce que sa forme externe est adaptée à la forme interne du corps creux (1).

6. Garniture de mousse selon une des revendications 3 à 5, utilisée dans le corps creux constitué par le pied-droit traversé par le tuyau d'écoulement de l'eau provenant d'un toit ouvrant d'une automobile de tourisme, caractérisée en ce que le tuyau traverse la garniture de mousse (2) et est percé d'au moins un trou permettant la mise au vide de la garniture (2) par l'intermédiaire du tuyau.
